# EUROPÄISCHE PATENTSCHRIFT

(11) **EP 2 768 360 B1**
(45) Veröffentlichungstag und Bekanntmachung des Hinweises auf die Patenterteilung: **03.12.2014**
(21) Anmeldenummer: 12780459.9
(22) Anmeldetag: 15.10.2012
(51) Int. Cl.: A47J 31/60, A47J 31/34

(54) **KAFEEMASCHINE, INSBESONDERE KAFFEEVOLLAUTOMAT SOWIE VERFAHREN ZUM BETREIBEN EINER KAFFEEMASCHINE**
COFFEE MACHINE, IN PARTICULAR FULLY AUTOMATIC COFFEE MACHINE, AND METHOD FOR OPERATING A COFFEE MACHINE
MACHINE À CAFÉ, NOTAMMENT MACHINE À CAFÉ ENTIÈREMENT AUTOMATIQUE, ET PROCÉDÉ PERMETTANT DE FAIRE FONCTIONNER UNE MACHINE À CAFÉ

(30) Priorität: 19.10.2011 DE 102011054601
(43) Veröffentlichungstag der Anmeldung: 27.08.2014
(73) Patentinhaber: Eugster/Frismag AG, 8580 Amriswil (CH)
(72) Erfinder: FISCHER, Daniel, 8590 Romanshorn (CH); RIESSBECK, Wolfgang, 8597 Landschlacht (CH)
(74) Vertreter: Wagner, Kilian
(86) Internationale Anmeldenummer: PCT/EP2012/070402
(87) Internationale Veröffentlichungsnummer: WO 2013/057071

(56) Entgegenhaltungen:
- WO-A1-2009/124786
- DE-A1-102004 049 876

## Beschreibung

Die Erfindung betrifft eine Kaffeemaschine, insbesondere einen Kaffeevollautomaten, gemäß dem Oberbegriff des Anspruchs 1, umfassend einen Wassertank, eine Heizeinrichtung zum Aufheizen von Wasser, eine Brüheinheit zum Auslaugen von gemahlenen Kaffeebohnen mittels des von der Heizeinrichtung erhitzten Wassers, ein mindestens eine Wasserleitung umfassendes Wasserleitungssystem sowie eine Förderpumpe zum Fördern von Wasser aus dem Wassertank durch das Wasserleitungssystem. Ferner betrifft die Erfindung ein Verfahren zum Betreiben einer Kaffeemaschine gemäß Anspruch 7.

Kaffeevollautomaten sind allgemein bekannt. Diese umfassen einen Wassertank, eine Heizeinrichtung, eine Brüheinheit sowie eine Förderpumpe, mit der Wasser aus dem Wassertank über die Heizeinrichtung in die Brüheinheit förderbar ist, in welcher mit dem erhitzten Wasser Kaffeemehl (gemahlene Kaffeebohnen) ausgelaugt werden kann. Das Kaffeeprodukt verlässt dann die Brüheinheit in Richtung Trinkbehältnis. Meist haben Kaffeevollautomaten auch einen Bohnenvorratsbehälter sowie ein integrales Mahlwerk, mit welchem Kaffeebohnen frisch gemahlen werden können, um dann der Brüheinheit vor einem Brühvorgang zugeführt zu werden. Darüber hinaus sind Kaffeevollautomaten bekannt, die zusätzlich eine Dampferzeugungseinheit und/oder eine Milchschaumerzeugungseinheit aufweisen. Bekannte Kaffeevollautomaten müssen in regelmäßigen Abständen entkalkt und gereinigt werden. Zum Entkalken des Kaffeevollautomaten ist es üblich, Entkalkungsmittel dem Wassertank zuzugeben, wobei häufig Entkalkungsmittel in Tablettenform eingesetzt wird, welches nach Herstellerangaben vor der Zugabe zum Wassertank geeignet in Wasser aufgelöst werden muss. In der Praxis werden Entkalkungstabletten jedoch häufig im Wasserbehälter aufgelöst. Dies wiederum führt bei nicht korrekter Auflösung bzw. frühzeitigem Start des Entkalkungsvorgangs dazu, dass noch nicht aufgelöstes Entkalkungsmittel in das Wasserleitungssystem gefördert wird und dort zu Ablagerungen und sonstigen Nachteilen führen kann. Bei bekannten Kaffeevollautomaten ist es notwendig, nach dem Entkalkungsvorgang den Wassertank manuell zu reinigen, um eine Kontamination des Kaffeeprodukts nach einem Entkalkungsvorgang mit Entkalkungsmittel zu vermeiden. Zur Reinigung von Kaffeevollautomaten, insbesondere zum Lösen von Fett in der Brüheinheit, ist es bekannt, der Brüheinheit unmittelbar eine Reinigungstablette zuzugeben, die dann in der Brüheinheit aufgelöst wird.

Aus der WO 2009/124786 A1 ist eine Getränkezubereitungsmaschine bekannt, bei welcher unterhalb eines abnehmbaren Wassertanks eine Kammer zur Aufnahme von Entkalkungsmitteln vorgesehen ist. Zur Befüllung der Kammer mit Entkalkungsmitteln muss der Wasserbehälter abgenommen und danach wieder auf die Kammer dichtend aufgesetzt werden. Das Wasser aus dem Wassertank strömt im aufgesetzten Zustand des Wassertanks immer durch die Kammer, so dass bei mit Entkalkungsmitteln gefüllter Kammer kein Getränk herstellbar ist.

Aus der DE 10 2004 049 876 A1 ist eine Filterkartusche zum Einsetzen in einen Wassertank einer Getränkezubereitungsmaschine bekannt, wobei Wasser im eingesetzten Zustand der Filterkartusche zwingend die Kartusche durchströmt, auch für den Fall, dass die Wirksubstanz der Filterkartusche aufgebraucht ist.

Ausgehend von dem vorstehenden Stand der Technik liegt der Erfindung die Aufgabe zugrunde, eine verbesserte Kaffeemaschine sowie ein Verfahren zum Betreiben derselben anzugeben, die komfortabler zu entkalken und/oder zu reinigen ist. Insbesondere soll die Kontamination des Wassertanks mit der einzusetzenden chemischen Wirksubstanz vermieden werden und/oder es soll eine vollständige Auflösung/Vermischung der chemischen Wirksubstanz sichergestellt werden.

Diese Aufgabe wird hinsichtlich der Kaffeemaschine mit den Merkmalen des Anspruchs 1 gelöst.

Hinsichtlich des Verfahrens wird die Aufgabe mit den Merkmalen des Anspruchs 7 gelöst.

Vorteilhafte Weiterbildungen der Erfindung sind in den Unteransprüchen angegeben.

Der Erfindung liegt der Gedanke zugrunde, die chemische Wirksubstanz zum Pflegen der Kaffeemaschine, insbesondere zum Entkalken und/oder Reinigen, nicht wie bisher dem, insbesondere entnehmbar angeordneten, Wassertank zuzugeben und/oder im Falle eines Reinigungsmittels der Brühkammer, sondern stattdessen (zusätzlich zu dem Wassertank) eine spezielle (Wirksubstanz-) Kammer und/oder eine Anschlussmöglichkeit für eine solche Kammer für die chemische Wirksubstanz, insbesondere ein Entkalkungs- und/oder Reinigungsmittel, vorzusehen, wobei die, vorzugsweise mit der Wirksubstanz gefüllte, Kammer so an das Wasserleitungssystem der Kaffeemaschine anschließbar und/oder zuschaltbar sein soll, dass das Wasser aus dem Wassertank mittels der Förderpumpe durch die Kammer in das Wasserleitungssystem förderbar ist, wobei bei diesem Durchtransport durch die Kammer die, vorzugsweise in Wasser gelöste, chemische Wirksubstanz mittransportiert wird, um dann im Wasserleitungssystem, insbesondere der Brüheinheit und/oder der Heizeinrichtung, ihre bestimmungsgemäße Wirkung zu entfalten. Hierzu umfasst die Kammer vorzugsweise einen Wassereingang und einen Wasserausgang, welcher, wie später noch erläutert werden wird, weiter vorzugsweise mit einem Rückschlagventil ausgestattet ist. Wie später noch erläutert werden wird, kann eine fest in die Kaffeemaschine integrierte Kammer vorgesehen werden, die, beispielsweise mittels eines über eine Steuereinheit ansteuerbaren Zuschaltventils, beispielsweise zum Starten eines Entkalkungs- und/oder Reinigungsvorgangs, dem Wasserleitungssystem zugeschaltet werden kann. Auch ist es möglich, eine Kammer in Form eines Behälters vorzusehen, der von der Kaffeemaschine entnehmbar ist, beispielsweise um diesen mit einer chemischen Wirksubstanz zu befüllen. Bevorzugt ist die im Behälter vorgesehene Kammer dann mittels eines Zuschaltventils zuschaltbar.

Auch ist es denkbar, wie später noch erläutert werden wird, dass eine Kammer in der Kaffeemaschine zwischen einer angeschlossenen Position, in der die Kammer entweder unmittelbar durchströmbar oder zuschaltbar ist, und einer nicht in das Wasserleitungssystem angeschlossenen Position verstellbar ist.

Insgesamt wird durch die erfindungsgemäße Kaffeemaschine sowie das Verfahren zum Betreiben dersolchen eine besonders komfortable Möglichkeit geschaffen, die Kaffeemaschine zu reinigen und/oder zu entkalken. Insbesondere kann durch eine geeignete Programmsteuerung des auszulösenden Vorgangs sichergestellt werden, dass, beispielsweise in Tablettenform in die Kammer zugegebene, Wirksubstanz vollständig aufgelöst und/oder mit Wasser vermischt wird. Ein wesentlicher Vorteil einer nach dem Konzept der Erfindung ausgebildeten Kaffeemaschine besteht darin, dass die chemische Substanz nicht unmittelbar in den Wassertank zugegeben werden muss, so dass auf einen separaten Freispül- bzw. Reinigungsvorgang des Wassertanks verzichtet werden kann. Auch ist es möglich und bevorzugt in der Kammer eine Menge an Wirksubstanz vorzusehen, die für mehrere Wirkvorgänge, insbesondere Entkalkungs- und/oder Reinigungsvorgange ausreichend ist. Je nach Beschaffenheit der chemischen Wirksubstanz kann vorgesehen werden, dass diese, insbesondere durch eine geeignete Ventilschaltung, nur zu bestimmten Aggregaten der Kaffeemaschine strömt. So kann es beispielsweise im Falle von Entkalkungsmittel erforderlich oder sinnvoll sein, dieses lediglich durch die Heizeinrichtung, nicht jedoch durch die Brüheinheit zu fördern.

Grundsätzlich ist es möglich und bevorzugt, dass im Falle des Anschlusses und/oder der Zuschaltung der Kammer der gesamte von der Förderpumpe erzeugte Wasserstrom durch die Kammer strömt - denkbar ist jedoch eine alternative Ausführungsform, bei der nur ein Teilvolumenstrom des geförderten Wassers durch die Kammer strömt und ein anderer Teil gebypasst wird und dass vorzugsweise beide Teilströme in einem hinter der Kammer gelegenen Bereich wieder zusammengeführt werden.

Das Verstellen zwischen einer angeschlossenen Position und einer nicht angeschlossenen Position kann manuell oder automatisch, beispielsweise mittels eines elektromotorischen Verstellantriebs, erfolgen. Ebenso kann das Bestätigen eines fakultativ vorgesehenen Zuschaltventils manuell oder automatisch aktuiert erfolgen.

Wie bereits angedeutet, besteht eine Möglichkeit darin, die Kammer fest in die Kaffeemaschine zu integrieren, wobei der Kammer vorzugsweise eine Öffnung und/oder ein Deckel bzw. Verschluss zugeordnet ist, um die Kammer mit einer chemischen Wirksubstanz befüllen zu können und bevorzugt wieder verschließen zu können. Alternativ ist die Kammer, insbesondere in Form eines Behälters, von der Kaffeemaschine entnehmbar, beispielsweise um diese in entnommenem Zustand befüllen und/oder reinigen zu können. Im Falle der verstellbaren Anordnung sind geeignete Kupplungsanschlüsse an der Kammer zum Koppeln mit einem Zu- und einem Ablauf vorzusehen. Bevorzugt ist zumindest einem dieser Anschlüsse ein Rückschlagventil zugeordnet, um ein Auslaufen der Kammer im verstellten (nicht angeschlossenen) Zustand zu vermeiden.

Im Hinblick auf die Anordnung der Kammer in Bezug auf die Förderpumpe gibt es zwei Alternativen. Sämtlichen Alternativen gemeinsam ist, dass die Kammer den Wassertank in Wasserströmungsrichtung nachgeordnet sein muss. Die Kammer kann sowohl auf der Saugseite der Pumpe oder auf der Druckseite der Förderpumpe angeordnet werden, bevorzugt jedoch in Wasserströmungsrichtung vor der Heizeinrichtung und/oder der Brüheinheit.

Wie eingangs bereits angedeutet, ist es denkbar, die Kaffeemaschine so zu gestalten, dass die Kaffeemaschine, im Falle der Ausbildung der Kammer als zwischen zwei Positionen verstellbare Kammer, die Kammer bei betriebener Förderpumpe unmittelbar durchströmt wird, wenn die Kammer sich in einer angeschlossenen Position befindet, d.h. in diesem Fall muss kein zusätzlichen Zuschalten erfolgen. Selbstverständlich kann bei Bedarf zusätzlich ein, beispielsweise manuell oder automatisch betätigbares, Zuschaltventil vorgesehen werden. Im Falle der festen Integration ist ein solches Zuschaltventil erforderlich, um zu verhindern, dass im Normalbetrieb (Brühbetrieb) Wasser die Kammer durchströmt. Im Falle des Vorsehens eines Zuschaltventils ist dieses zumindest zwischen zwei Schaltpositionen verstellbar, nämlich zwischen einer ersten Schaltposition, in der Wasser unter Umgehung der Kammer im Wasserleitungssystem förderbar ist, und einer zweiten Schaltstellung, in der die Kammer zugeschaltet ist und der von der Förderpumpe geförderte Wasserstrom teilweise oder vollständig durch die Kammer förderbar ist.

Besonders zweckmäßig ist es, der Kammer, insbesondere eingangsseitig, ein, im einfachsten Fall als Drosselventil ausgebildetes, Dosierventil zuzuordnen, mittels dem die durch die Kammer zu fördernde Wassermenge vorgegeben oder vorgebbar ist. Zusätzlich oder alternativ kann, insbesondere ausgangsseitig, der Kammer ein Rückschlagventil zugeordnet werden, um im Falle des Normalbetriebes ein Einfördern von Wasser von der Kammerrückseite her zu vermeiden. Zusätzlich oder alternativ kann auch ein Rückschlagventil eingangsseitig vorgesehen werden.

Wie bereits erläutert, besteht eine Ausgestaltungsmöglichkeit der Kaffeemaschine darin, dass die Kammer in oder an der Kaffeemaschine zwischen mindestens zwei Positionen, beispielsweise rotatorisch oder translatorisch, verstellbar ist. Dabei ist die Kammer in der ersten Position von dem der Förderpumpe zugeordneten Wasserleitungssystem abgekoppelt und in der zweiten Position an das Wasserleitungssystem angeschlossen, wobei bezüglich der zweiten Position wiederum unterschiedliche Ausgestaltungsmöglichkeiten realisierbar sind, nämlich eine erste, bei der die Kammer in der zweiten Position während des Betriebes der Pumpe automatisch durchströmt wird, und einer weiteren Alternative, bei welcher zuvor ein fakultatives Zuschaltventil geöffnet werden muss.

Im Falle einer verstellbar angeordneten Kammer ist es bevorzugt, wenn unmittelbar durch das Verstellen der Kammer in der ersten Position eine Bypassleitung zur Umgehung der Kammer geöffnet und in der zweiten Position geschlossen ist.

Weiterbildungsgemäß umfasst die Kaffeemaschine eine Steuereinheit, mit der ein Reinigungs- und/oder Entkalkungsvorgang unter Durchströmung der Kammer mit Wasser auslösbar ist. Dabei kann die Steuereinheit beispielsweise die Förderpumpe einschalten und, falls vorhanden, ein Zuschaltventil so ansteuern, dass dieses den Zufluss zur Kammer öffnet. Die Steuereinheit kann den Reinigungs- und/oder Entkalkungsvorgang beispielsweise als Reaktion auf eine manuelle Vorgabe starten, insbesondere als Reaktion auf ein Betätigen von Eingabemitteln und/oder im Falle der verstellbaren Anordnung der Kammer als Reaktion auf ein Verstellen in eine angeschlossene Position. Zusätzlich oder alternativ kann die Steuereinheit den Reinigungs- und/oder Entkalkungsvorgang automatisch, beispielsweise nach Ablauf einer Zeitspanne und/oder bei Eintreten eines definierten Ereignisses, starten, so beispielsweise nach Bezug einer vorgegebenen oder vorgebbaren Anzahl an Kaffeeprodukten.

Die Erfindung führt ferner auf ein Verfahren zum Betreiben einer vorzugsweise wie zuvor beschrieben ausgebildeten Kaffeemaschine. Besonders zweckmäßig ist es, wenn die Kaffeemaschine ein integrales Mahlwerk und/oder eine Dampferzeugungseinrichtung und/oder eine Milchschaumerzeugungseinrichtung umfasst. Das Verfahren umfasst den Schritt des manuellen oder automatischen Befüllens einer Kammer der Kaffeemaschine mit einer chemischen Wirksubstanz. Ferner umfasst das Verfahren den Schritt des manuellen oder automatischen Anschließens und/oder Zuschaltens der Kammer in das Wasserleitungssystem, wobei das Anschließen bereits durch ein vorerwähntes Verstellen bewirkt werden kann. Das Zuschalten eines fakultativen Zuschaltventils kann beispielsweise ausgelöst werden durch ein Verstellen einer Kammer. Ein wesentlicher Schritt des Verfahrens besteht darin, dass Wasser mittels der Förderpumpe aus dem Wassertank durch die Kammer transportiert und somit Wirksubstanz in das Wasserleitungssystem aus der Kammer eingetragen wird.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1:: den schematischen Aufbau einer Kaffeemaschine mit zwei alternativen Positionen für eine Wirksubstanz,
- Fig. 2:: eine mögliche Ausgestaltung der Anordnung der Kammer als fest in das Fluidsystem integrierte/eingebaute Kammer,
- Fig. 3:: eine alternative Ausgestaltung der Anordnung bzw. Ausbildung der Kammer als entnehmbarer Behälter,
- Fig. 4:: eine weitere alternative Ausgestaltung der Kammeranordnung bzw. - ausbildung als, hier rotatorisch, verstellbare Kammer, und
- Fig. 5:: eine alternative, translatorisch verstellbare Anordnung der Kammer.

In den Figuren sind gleiche Elemente und Elemente mit der gleichen Funktion mit den gleichen Bezugszeichen gekennzeichnet.

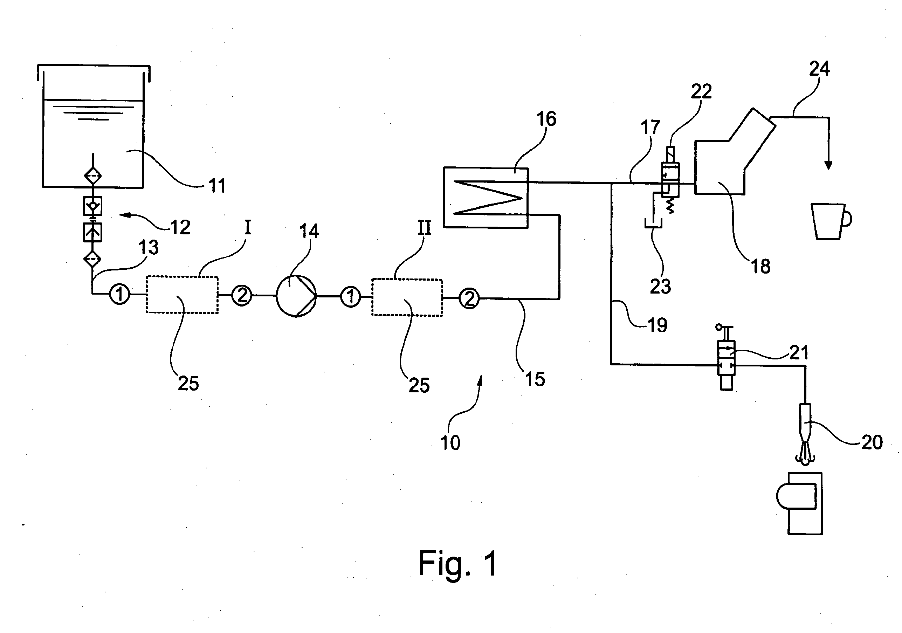

In Fig. 1 ist mit dem Bezugszeichen 10 der prinzipielle Aufbau einer Kaffeemaschine 10 gezeigt. Diese umfasst einen entnehmbar angeordneten Wassertank, dem ein Kupplungsventil 12 zugeordnet ist. Der Wassertank 11 ist über das Kupplungsventil 12 an ein Wasserleitungssystem 13 angeschlossen, in welchem Wasser aus dem Wassertank 11 mittels einer Förderpumpe 14 förderbar ist. Eine Leitung 15 des Wasserleitungssystems 13 führt von dem Wassertank 11 über die Förderpumpe 14 zu einer Heizeinrichtung 16 (Thermoblock) und teilt sich danach auf in eine zu einer Brüheinheit 18 führende Leitung 17 und eine Leitung 19, die zu einem Dampferzeuger 20 führt. Diesem ist ein Ventil 21 vorgeschaltet. Der Brüheinheit 18 ist in an sich bekannter Weise ein Drainageventil 22 zugeordnet, über welches die Brüheinheit 18, beispielsweise zum Auspressen des Tresters nach einem Brühvorgang, fluidleitend mit einer Auffangschale 23 verbindbar ist. Aus der Brüheinheit 18 führt ein Auslasskanal 24 zu einem Trinkbehältnis. Bei Bedarf kann der Brüheinheit 18 ein nicht gezeigtes Mahlwerk zum frischen Mahlen von Kaffeebohnen aus einem Kaffeebohnenvorratsbehälter zugeordnet werden.

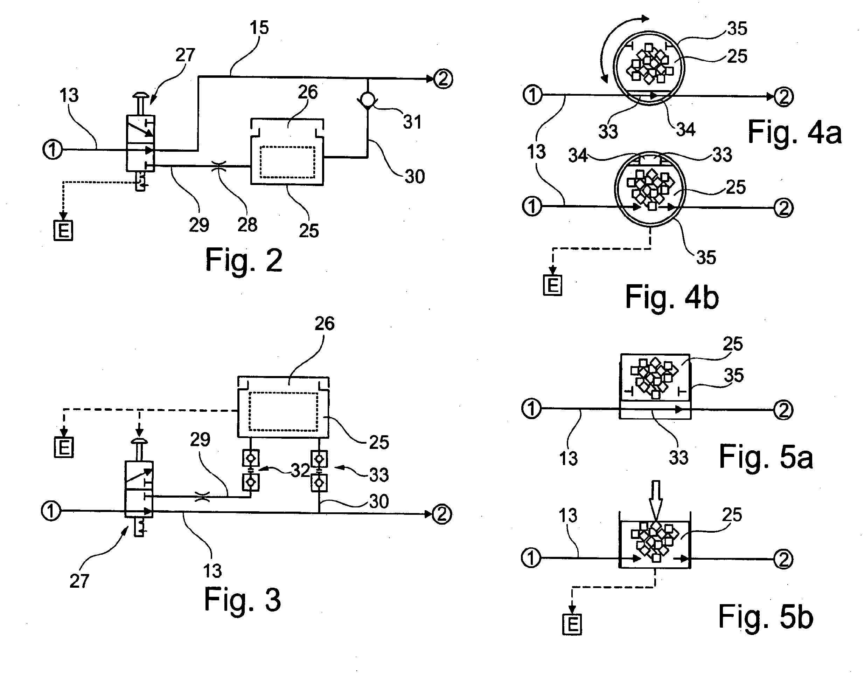

In der Zeichnungsebene links von der Förderpumpe 14 befindet sich eine erste mögliche Position 1 für eine (Wirksubstanz-) Kammer 25. Diese befindet sich saugseitig in Bezug auf die Förderpumpe 14. In der Zeichnungsebene rechts von der Förderpumpe befindet sich eine alternative Position 2 für eine solche Kammer 25. Die Kammer 25 befindet sich in den Positionen 1 und 2 jeweils zwischen den Punkten 1 und 2. Alternative Ausgestaltungsvarianten für die Positionen 1 und/oder 2 werden im Folgenden anhand der Fig. 2 bis 5 beschrieben.

In Fig. 2 ist eine mögliche Situation gezeigt, bei der die Kammer zur Aufnahme einer chemischen Wirksubstanz, insbesondere eines Reinigungs- und/oder Entkalkungsmittels, fest in die Kaffeemaschine 10 integriert ist. Die Kammer 25 umfasst eine verschließbare Öffnung, durch die die chemische Wirksubstanz bei Bedarf, insbesondere bei Aufforderung durch die Kaffeemaschine 10, zugegeben werden kann. In Wasserströmungsrichtung der Kammer 25 vorgeordnet befindet sich ein Zuschaltventil 27, mit welchem die Kammer 25, vorzugsweise gesteuert durch eine nicht gezeigte Steuereinrichtung, an das Wasserleitungssystem 13 zuschaltbar ist, derart, dass bei Zuschaltung Wasser von der in Fig. 1 gezeigten Fördereinrichtung durch die Kammer 25 gesaugt oder durch diese gedrückt werden kann. Zwischen dem Zuschaltventil 27 und der Kammer 25 befindet sich ein als Drossel ausgebildetes Dosierventil 28, das in einer Zuleitung 29 eingebaut ist, die das Zuschaltventil 27 mit der Kammer 25 verbindet. Eine Auslassleitung 30, durch die Wasser mit Wirksubstanz in das Wasserleitungssystem 13 einströmen kann, ist mit einem Rückschlagventil 31 ausgestattet, um zu verhindern, dass im Normalbetrieb Wasser von der Rückseite her in die Kammer 25 einströmen kann. In dem gezeigten Ausführungsbeispiel ist das Zuschaltventil 27 verstellbar zwischen zwei Schaltpositionen, nämlich einer Schaltposition, in der die Kammer 25 zugeschaltet ist und Wasser durch die Zuleitung 29 in die Kammer 25 hineinströmen, dort Wirksubstanz mit- bzw. aufnehmen und durch die Auslassleitung 30 wieder in das Wasserleitungssystem 13 ausströmen kann. In der weiteren Schaltstellung ist die Zuleitung 29 gesperrt und Wasser strömt über die Leitung 15.

Die Betätigung des Zuschaltventils kann manuell oder elektrisch erfolgen, wobei in dem gezeigten Ausführungsbeispiel das Betätigen des Zuschaltventils ein den Entkalkungsprozess E startendes Signal auslöst.

Das Ausführungsbeispiel gemäß Fig. 3 unterscheidet sich von dem in Fig. 2 gezeigten und in diesem Zusammenhang beschriebenen Ausführungsbeispiel dadurch, dass die Kammer 25 nicht fest in die Kaffeemaschine 10 eingebaut ist, sondern entnehmbar angeordnet ist. Hierzu ist in der Zuleitung 29 sowie der Auslassleitung 30 jeweils eine Kupplung 32, 36 integriert, die ein Anschließen und Abkoppeln der Kammer 25 an das Wasserleitungssystem 13 ermöglicht. In dem gezeigten Ausführungsbeispiel ist der Kammer 25 analog zu dem Ausführungsbeispiel gemäß Fig. 2 ein Zuschaltventil 27 vorgeordnet, mit dem die Kammer 25 in das Wasserleitungssystem 13 zuschaltbar ist. Die Anordnung gemäß Fig. 3 ist so konfiguriert, dass durch Einsetzen und damit Anschließen der Kammer 25, beispielsweise über einen Druckschalter, ein den Entkalkungsprozess E startendes Signal an die Steuereinheit generiert wird, auf dessen Reaktion hin auch das Zuschaltventil 27 umgeschaltet wird.

In Fig. 4 ist eine alternative Ausgestaltung der Kammersituation gezeigt. Das Ausführungsbeispiel umfasst eine, hier rotatorisch innerhalb der Kaffeemaschine 10, manuell oder automatisch, beispielsweise über einen Elektromotor verstellbare Kammer 25, die zwischen der in Fig. 4a gezeigten, nicht an das Wasserleitungssystem 13 angeschlossenen Position und einer in Fig. 4b gezeigten, angeschlossenen Position verstellbar ist. Bei dem Ausführungsbeispiel gemäß den Fig. 4a und 4b wurde bewusst auf ein zusätzliches Zuschaltventil verzichtet, wobei dies bei Bedarf zusätzlich, beispielsweise analog zu Fig. 3, vorgesehen werden kann.

In der in Fig. 4a gezeigten Position ist eine Bypassleitung 33 freigeschaltet, die in dem gezeigten Ausführungsbeispiel von einer Strömungskammer 34 eines rotierbaren, die Kammer 25 umfassenden Behältnisses 35 gebildet ist. Wird die das Behältnis 35 um eine Drehachse rotiert, so wird die Kammer 25 an das Wasserleitungssystem 13 angeschlossen und ist automatisch, wie in Fig. 4b gezeigt, von Wasser durchströmbar. Durch Rotieren der Kammer 25, genauer des Behältnisses 35 von der in Fig. 4a in die in Fig. 4b gezeigte Position wird, beispielsweise über einen Druck- oder Positionsschalter, ein den Entkalkungsprozess E startendes Signal generiert, auf dessen Reaktion hin die Steuereinheit beispielsweise die Förderpumpe startet.

Das Ausführungsbeispiel gemäß den Fig. 5a und 5b arbeitet nach dem gleichen Prinzip wie das Ausführungsbeispiel gemäß den Fig. 4a und 4b mit dem Unterschied, dass die Kammer nicht rotatorisch, sondern translatorisch zwischen der in 5a gezeigten, vom Wasserleitungssystem 13 entkoppelten Position und der in Fig. 5b gezeigten, an das Wasserleitungssystem 13 angeschlossenen Position verstellbar ist. In der in Fig. 5a gezeigten Position wird eine Bypassleitung gebildet von einem Behältnis 35. Die Bypassleitung 33 ist unterbrochen bzw. überbrückt in Fig. 5b von der dann an das Wasserleitungssystem 13 angeschlossenen Kammer 25 mit Wirksubstanz.

### Bezugszeichenliste

- 1: Position in Strömungsrichtung vor der Kammer
- 2: Position in Strömungsrichtung nach der Kammer

- 10: Kaffeemaschine
- 11: Wassertank
- 12: Kupplungsventil
- 13: Wasserleitungssystem
- 14: Förderpumpe
- 15: Leitung
- 16: Heizeinrichtung
- 17: Leitung
- 18: Brüheinheit
- 19: Leitung
- 20: Dampferzeuger
- 21: Ventil
- 22: Drainageventil
- 23: Auffangschale
- 24: Auslasskanal
- 25: Kammer
- 26: verschließbare Öffnung
- 27: Zuschaltventil
- 28: Dosierventil bzw. Drossel
- 29: Zuleitung
- 30: Auslassleitung
- 31: Rückschlagventil
- 32: Kupplung
- 33: Bypassleitung
- 34: Strömungskammer
- 35: Behältnis
- 36: Kupplung

## Patentansprüche

1. Kaffeemaschine (10), insbesondere Kaffeevollautomat, umfassend einen Wassertank (11), eine Heizeinrichtung (16) zum Aufheizen von Wasser, eine Brüheinheit (18) zum Auslaugen von gemahlenen Kaffeebohnen mittels des von der Heizeinrichtung (16) erhitzen Wassers, ein mindestens eine Wasserleitung umfassendes Wasserleitungssystem (13) sowie eine Förderpumpe (14) zum Fördern von Wasser aus dem Wassertank (11) durch das Wasserleitungssystem (13), wobei eine Kammer (25) für eine chemische Wirksubstanz, insbesondere ein Entkalkungs-und/oder Reinigungsmittel, vorgesehen ist, die an das Wasserleitungssystem (13) derart manuell oder automatisch, anschließbar und/oder zuschaltbar ist, dass Wasser aus dem Wassertank (11) mittels der Förderpumpe (14) durch die Kammer (25) in das Wasserleitungssystem (13) förderbar ist,
**dadurch gekennzeichnet,**
**dass** der Kammer (25) ein Zuschaltventil (27) zugeordnet ist, das zwischen einer ersten Schaltposition, in der der von der Förderpumpe geförderte Wasserstrom vollständig unter Umgehung der Kammer (25) im Wasserleitungssystem (13) förderbar ist, und einer zweiten Schaltstellung, in der die Kammer (25) zugeschaltet und der von der Förderpumpe geförderte Wasserstrom teilweise oder vollständig durch die Kammer (25) förderbar ist, verstellbar ist,
und/oder
**dass** die Kammer (25) in oder an der Kaffeemaschine (10), vorzugsweise rotatorisch oder translatorisch, verstellbar ist, zwischen einer ersten Position, in der die Kammer (25) von dem Wasserleitungssystem (13) abgekoppelt ist, und einer zweiten Position, in der die Kammer (25) an das Wasserleitungssystem (13) angeschlossen ist.

2. Kaffeemaschine (10) nach Anspruch 1,
**dadurch gekennzeichnet,**
**dass** die Kammer (25) fest in die Kaffeemaschine (10) integriert oder alternativ als Behälter (35) entnehmbar, insbesondere austauschbar, oder zwischen zwei Positionen verstellbar angeordnet ist.

3. Kaffeemaschine (10) nach einem der Ansprüche 1 oder 2,
**dadurch gekennzeichnet,**
**dass** die Kammer (25) saugseitig oder druckseitig in Bezug auf die Förderpumpe (14) angeordnet ist.

4. Kaffeemaschine (10) nach einem der vorhergehenden Ansprüche,
**dadurch gekennzeichnet,**
**dass** der Kammer (25), insbesondere eingangsseitig, ein Dosierventil (28) und/oder, insbesondere eingangs- und/oder ausgangsseitig, ein Rückschlagventil (31) zugeordnet ist.

5. Kaffeemaschine (10) nach einem der vorhergehenden Ansprüche,
**dadurch gekennzeichnet,**
**dass** durch Verstellen der Kammer (25) in der ersten Position eine Bypassleitung (33) geöffnet und in der zweiten Position geschlossen ist.

6. Kaffeemaschine (10) nach einem der vorhergehenden Ansprüche,
**dadurch gekennzeichnet,**
**dass** die Kaffeemaschine (10) eine Steuereinheit aufweist, die als Reaktion auf eine manuelle Vorgabe, insbesondere als Reaktion auf ein Betätigen von Eingabemitteln oder als Reaktion eines Verstellens oder Einsetzens der Kammer (25), und/oder automatisch, insbesondere nach Ablauf einer Zeitspanne und/oder bei Eintreten eines definierten Ereignisses, und/oder nach einem automatischen Verstellen einen Reinigungs- und/oder Entkalkungsvorgang auslösend ausgebildet sind, bei welchem Wasser durch die Kammer (25) förderbar ist.

7. Verfahren zum Betreiben einer Kaffeemaschine (10), insbesondere nach einem der vorhergehenden Ansprüche, umfassend einen Wassertank (11), eine Heizeinrichtung (16) zum Aufheizen von Wasser, eine Brüheinheit (18) zum Auslaugen von gemahlenen Kaffeebohnen mittels des von der Heizeinrichtung (16) erhitzen Wassers, ein mindestens eine Wasserleitung umfassenden Wasserleitungssystem (13) sowie einer Förderpumpe (14) zum Fördern von Wasser aus dem Wassertank (11) durch das Leitungssystem (13),
mit den Schritten:
∘ Befüllen einer Kammer (25) mit einer chemischen Wirksubstanz, insbesondere mit einem Entkalkungs-und/oder Reinigungsmittel, und/oder Einsetzen einer mit einer chemischen Wirksubstanz, insbesondere einem Entkalkungs- und/oder Reinigungsmittel, manuell gefüllten oder bereits vorgefüllten Kammer (25),
∘ Manuelles oder automatisches Anschließen der Kammer an das Wasserleitungssystem durch das Verstellen der Kammer von einer ersten Position, in welcher die Kammer nicht von dem von der Förderpumpe geförderten Wasserstrom durchströmbar ist in eine zweite Position in der die Kammer mit Wasser durchströmbar ist und/oder Zuschalten der Kammer (25) an das Wasserleitungssystem (13) durch Betätigen eines Zuschaltventils (27), wobei die Kammer im nicht zugeschalteten Zustand nicht von dem von der Förderpumpe geförderten Wasserstrom durchströmbar ist,
∘ Fördern von Wasser aus dem Wassertank (11) mittels der Förderpumpe (14) in dem Wasserleitungssystem (13) durch die Kammer (25) hindurch und dadurch Eintragen der chemischen Wirksubstanz in das Wasserleitungssystem (13).

8. Verfahren nach Anspruch 7,
**dadurch gekennzeichnet,**
**dass** die Wirksubstanz durch die Heizeinrichtung (16) und/oder die Brüheinheit (18), oder ausschließlich durch die Heizeinrichtung (16) und nicht durch die Brüheinheit (18) oder ausschließlich durch die Brüheinheit (18) und nicht durch die Heizeinrichtung (16) gefördert wird.

## Claims

1. A coffee machine (10), in particular an automatic coffee machine, comprising a water tank (11), a heating device (16) for heating up water, a brewing unit (18) for extracting ground coffee beans by means of the water, which is heated by the heating device (16), a water pipe system (13), which comprises at least one water pipe, as well as a conveying pump (14) for conveying water from the water tank (11) through the water pipe system (13), wherein provision is made for a chamber (25) for an active chemical ingredient, in particular a decalcifier and/or cleanser, which can be connected and/or switched manually or automatically to the water pipe system (13) such that water can be conveyed from the water tank (11) through the chamber (25) into the water pipe system (13) by means of the conveying pump (14),
**characterized in**
**that** an adding valve (27), which can be switched between a first switching position, in which the water flow conveyed by the conveying pump can be conveyed completely in the water pipe system (13) by bypassing the chamber (25), and a second switching position, in which the chamber (25) is switched on and the water flow conveyed by the conveying pump can be conveyed through the chamber (25) either partially or completely, is assigned to the chamber (25),
and/or
**that** the chamber (25) can be adjusted, preferably in a rotatory or translatory manner in or at the coffee machine (10) between a first position, in which the chamber (25) is uncoupled from the water pipe system (13), and a second position, in which the chamber (25) is connected to the water pipe system (13).

2. The coffee machine (10) according to claim 1,
**characterized in**
**that** the chamber (25) is fixedly integrated in the coffee machine (10) or, in the alternative, is arranged so as to be removable as container (35), in particular so as to be replaceable, or so as to be capable of being adjusted between two positions.

3. The coffee machine (10) according to one of claims 1 or 2,
**characterized in**
**that** the chamber (25) is arranged on the suction side or on the pressure side with regard to the conveying pump (14).

4. The coffee machine (10) according to one of the preceding claims,
**characterized in**
**that** a metering valve (28) is assigned to the chamber (25), in particular at the input side, and/or that a return valve (31) is assigned to the chamber, in particular at the input and/or output side.

5. The coffee machine (10) according to one of the preceding claims,
**characterized in**
**that** a bypass line (33) is opened in the first position and is closed in the second position by adjusting the chamber (25).

6. The coffee machine (10) according to one of the preceding claims,
**characterized in**
**that** the coffee machine (10) encompasses a control unit, which is embodied so as to activate as reaction to a manual presetting, in particular as reaction to an operation of input devices or as reaction of an adjustment or use of the chamber (25), and/or automatically, in particular after a period of time has lapsed and/or when a defined event occurs, and/or after an automatic adjustment of a cleaning and/or decalcifying process, in response to which water can be conveyed through the chamber (25).

7. A method for operating a coffee machine (10), in particular according to one of the preceding claims, comprising a water tank (11), a heating device (16) for heating up water, a brewing unit (18) for extracting ground coffee beans by means of the water, which is heated by the heating device (16), a water pipe system (13), which comprises at least one water pipe, as well as a conveying pump (14) for conveying water from the water tank (11) through the pipe system (13),
comprising the steps:
∘ filling a chamber (25) with an active chemical ingredient, in particular with a decalcifier and/or cleanser, and/or using a chamber (25), which is filled manually or which is already prefilled with an active chemical ingredient, in particular a decalcifier and/or cleanser,
∘ manually or automatically connecting the chamber to the water pipe system by adjusting the chamber from a first position, in which the water flow, which is conveyed by the conveyor pump, cannot flow through the chamber, into a second position, in which water can flow through the chamber, and/or switching the chamber (25) to the water pipe system (13) by actuating an adding valve (27), wherein the water flow, which is conveyed by the conveying pump, cannot flow through the chamber, in the switched-off state,
∘ conveying water from the water tank (11) in the water pipe system (13) through the chamber (25) by means of the conveying pump (14) and thus adding the active chemical ingredient into the water pipe system (13).

8. The method according to claim 7,
**characterized in**
**that** the active chemical ingredient is conveyed through the heating device (16) and/or the brewing unit (18), or exclusively through the heating device (16) and not through the brewing unit (18), or exclusively through the brewing unit (18) and not through the heating device (16).

## Revendications

1. Machine à café (10), notamment machine à café entièrement automatique, comportant un réservoir d'eau (11), un dispositif de chauffage (16) destiné à chauffer de l'eau, une unité d'infusion (18) destinée à la percolation de grains de café moulus au moyen de l'eau chauffée par le dispositif de chauffage (16), un système de conduite d'eau (13) comportant au moins une conduite d'eau, ainsi qu'une pompe de refoulement (14) destinée à refouler de l'eau provenant du réservoir d'eau (11) à travers le système de conduite d'eau (13), une chambre (25) pour une substance active chimique, notamment un produit de détartrage et/ou de nettoyage, étant prévue, laquelle chambre peut être raccordée et/ou connectée manuellement ou automatiquement au système de conduite d'eau (13) de sorte que de l'eau provenant du réservoir d'eau (11) puisse être refoulée au moyen de la pompe de refoulement (14) à travers la chambre (25) dans le système de conduite d'eau (13),
**caractérisée**
**en ce qu'**une soupape de mise en circuit (27) est associée à la chambre (25), laquelle soupape de mise en circuit peut être déplacée entre une première position de commutation, dans laquelle le flux d'eau refoulé par la pompe de refoulement peut être refoulé complètement dans le système de conduite d'eau (13) en contournant la chambre (25), et une deuxième position de commutation, dans laquelle la chambre (25) est connectée et le flux d'eau refoulé par la pompe de refoulement peut être refoulé partiellement ou complètement à travers la chambre (25),
et/ou
**en ce que** la chambre (25) peut être déplacée, de préférence en rotation ou en translation, dans ou sur la machine à café (10), entre une première position, dans laquelle la chambre (25) peut être désaccouplée du système de conduite d'eau (13), et une deuxième position, dans laquelle la chambre (25) est raccordée au système de conduite d'eau (13).

2. Machine à café (10) selon la revendication 1,
**caractérisée**
**en ce que** la chambre (25) est intégrée fixement dans la machine à café (10) ou, en variante, est disposée en tant que récipient (35) de manière amovible, en particulier de manière remplaçable, ou de manière déplaçable entre deux positions.

3. Machine à café (10) selon l'une quelconque des revendications 1 et 2,
**caractérisée**
**en ce que** la chambre (25) est disposée côté aspiration ou côté pression par rapport à la pompe de refoulement (14).

4. Machine à café (10) selon l'une quelconque des revendications précédentes,
**caractérisée**
**en ce qu'**en particulier du côté de l'entrée, une soupape de dosage (28) est associée à la chambre (25) et/ou en ce qu'en particulier du côté de l'entrée et/ou de la sortie, une soupape anti-retour (31) est associée à la chambre (25).

5. Machine à café (10) selon l'une quelconque des revendications précédentes,
**caractérisée**
**en ce qu'**une conduite de dérivation (33) est ouverte par déplacement de la chambre (25) dans la première position et fermée par déplacement de la chambre dans la deuxième position.

6. Machine à café (10) selon l'une quelconque des revendications précédentes,
**caractérisée**
**en ce que** la machine à café (10) comprend une unité de commande qui est réalisée de manière à déclencher une opération de nettoyage et/ou de détartrage, lors de laquelle de l'eau peut être refoulée à travers la chambre (25), en réponse à une prescription manuelle, notamment en réponse à un actionnement de moyens d'entrée ou en réponse à un déplacement ou une insertion de la chambre (25), et/ou automatiquement, notamment après l'écoulement d'un laps de temps et/ou lorsqu'un événement défini se produit, et/ou après un déplacement automatique.

7. Procédé de fonctionnement d'une machine à café (10), notamment selon l'une quelconque des revendications précédentes, comportant un réservoir d'eau (11), un dispositif de chauffage (16) destiné à chauffer de l'eau, une unité d'infusion (18) destinée à la percolation de grains de café moulus au moyen de l'eau chauffée par le dispositif de chauffage (16), un système de conduite d'eau (13) comportant au moins une conduite d'eau, ainsi qu'une pompe de refoulement (14) destinée à refouler de l'eau provenant du réservoir d'eau (11) à travers le système de conduite (13),
comprenant les étapes de :
- remplissage d'une chambre (25) avec une substance active chimique, notamment avec un produit de détartrage et/ou de nettoyage, et/ou insertion d'une chambre (25) remplie manuellement ou déjà pré-remplie d'une substance active chimique, notamment d'un produit de détartrage et/ou de nettoyage,
- raccordement manuel ou automatique de la chambre au système de conduite d'eau par déplacement de la chambre d'une première position dans laquelle la chambre ne peut pas être traversée par le flux d'eau refoulé par la pompe de refoulement à une deuxième position dans laquelle la chambre peut être traversée par de l'eau, et/ou connexion de la chambre (25) au système de conduite d'eau (13) par actionnement d'une soupape de mise en circuit (27), la chambre ne pouvant pas être traversée par le flux d'eau refoulé par la pompe de refoulement dans l'état non connecté,
- refoulement d'eau provenant du réservoir d'eau (11) au moyen de la pompe de refoulement (14) dans le système de conduite d'eau (13) à travers la chambre (25) et, de ce fait, introduction de la substance active chimique dans le système de conduite d'eau (13).

8. Procédé selon la revendication 7,
**caractérisé**
**en ce que** la substance active est refoulée à travers le dispositif de chauffage (16) et/ou l'unité d'infusion (18), ou exclusivement à travers le dispositif de chauffage (16) et pas à travers l'unité d'infusion (18), ou exclusivement à travers l'unité d'infusion (18) et pas à travers le dispositif de chauffage (16).
